# EUROPEAN PATENT SPECIFICATION

(11) **EP 2 889 157 B1**
(45) Date of publication and mention of the grant of the patent: **01.05.2019**
(21) Application number: 14197656.3
(22) Date of filing: 12.12.2014
(51) Int. Cl.: B60C 1/00, B60C 11/00

(54) **Tire having tread with tread groove-containing rubber block joining the tire carcass with the tread cap**
Reifen mit Gummiblock mit Profilrillen zur Verbindung der Reifenkarkasse durch den Profilunterbau hindurch bis in die Laufflächenkrone
Pneu à bande de roulement avec bloc de caoutchouc terminal renfermant la rainure de roulement joignant la carcasse du pneu avec la bande de roulement

(30) Priority: 19.12.2013 US 201314134250; 19.12.2013 US 201314134055; 19.12.2013 US 201314134175
(43) Date of publication of application: 01.07.2015
(73) Proprietor: The Goodyear Tire & Rubber Company, Akron, Ohio 44316 (US)
(72) Inventor: Zhao, Junling, Hudson, OH Ohio 44236 (US); Meza, Roberto Cerrato, North Canton, OH Ohio 44720 (US); Goncalves, Paulo Roberto, 13465773 Americana, SP (BR); Forciniti, Leandro, Canton, OH Ohio 44720 (US); Busch, Warren James, North Canton, OH Ohio 44720 (US)
(74) Representative: Kutsch, Bernd

(56) References cited:
- WO-A1-2005/063508
- JP-A- 2001 047 815
- US-A1- 2002 174 924

## Description

### Field of the Invention

The invention relates to a pneumatic tire, particularly a truck or bus tire, with a tread of a cap/base configuration comprising a circumferential outer tread cap rubber layer and an underlying tread base rubber layer and a supporting tire carcass. The outer tread cap rubber layer is configured with lugs or grooves, particularly circumferential ribs with circumferential grooves between the ribs. A tread groove-containing rubber block as a tire component joins the tire carcass and extends from the tire carcass radially outward through the tread base rubber layer and into the outer tread cap rubber layer, or at least a portion of the tread grooves, including the bottom of a groove, is contained in a rubber encasement which is an extension of the tread base rubber layer, or a tread groove-containing rubber block tire component joins the tread base rubber layer and extends radially outward into the outer tread cap rubber layer.

### Background of the Invention

This invention relates to a tire, particularly a truck tire, and particularly a bus tire, intended to be used to support and carry relatively large vehicular loads over roads, which may contain irregular road surfaces. The lugs of the tire tread may be in a form of circumferential rubs. Rib treaded tires have been referred to, for example, US-A- 5,718,782, US-A-5,772,807 and US-A-5,843,249.

It is desired that the outer tread cap rubber layer of the tread, which contains the tread's running surface, is a rubber composition intended to promote durability of the tread, particularly for use on irregular road surfaces.

In one embodiment, the tread cap rubber composition is a natural rubber-rich rubber composition where a major portion of its elastomer is comprised of natural cis 1,4-polyisoprene rubber and a minor portion comprised of at least one of polybutadiene (e.g. cis 1,4-polybutadiene) and styrene/butadiene elastomers.

In another embodiment, the tread cap rubber composition is a polybutadiene rubber-rich (e.g. cis 1,4-polybutadiene-rich) rubber composition with a major portion of its elastomer is comprised of the polybutadiene rubber and a minor portion comprised of at least one of cis 1,4-polyisoprene and styrene/butadiene elastomers.

Where lower rolling resistance is desired for tires such as truck or bus tires to promote vehicular fuel economy, the outer tread cap rubber layer may contain reinforcing filler composed of a combination of rubber reinforcing carbon black and silica such as precipitated silica where a significant portion of the reinforcing filler is such silica. If the silica exceeds the rubber reinforcing carbon black in the outer tread rubber composition, the rubber composition might be referred to as being a silica-rich rubber.

During service of the tire, particularly over irregular road surfaces, the tread lugs, particularly circumferential tread ribs, may experience significant physical stress which may sometimes promote a degree of small surface crack formation on the tread groove surfaces between the tread lugs, or circumferential tread ribs, particularly in the bottom portion of the tread grooves.

WO-A-2005/063508 describes a tire in accordance with the preamble of claim 1. Similar approaches are described also in JP-A-2001-047815 and US-A-2002/0174924.

Historically, surfaces of tread grooves have sometimes been protected, when appropriate and if desired, by providing an external thin protective rubber layer over the surface, or surfaces, of the grooves. Further, in one aspect, tread grooves have sometimes been reinforced with stiffer rubber than the tread itself to promote handling of the tire. For an example, see US-B-6,213,181, US-A 5,176,765 and US-A-2010/0154948.

However, as a departure from such past practice, it is proposed to provide a rubber block, or encasement, within the tire tread for containing at least a portion of at least one of the tread grooves instead of being a simple rubber coating on the groove surface. In accordance with the invention, (i) a tread groove-containing rubber block as a tire component joins the tire carcass and extends from the tire carcass radially outward through the tread base rubber layer and into the outer tread cap rubber layer, or (ii) at least a portion of the tread grooves, including the bottom of a groove, is contained in a rubber encasement which is an extension of the tread base rubber layer, or (iii) a tread groove-containing rubber block tire component joins the tread base rubber layer and extends radially outward into the outer tread cap rubber layer. In this manner, then, for a circumferential groove, the rubber block itself would also be circumferential in a sense of extending circumferentially around the tire within the tire tread. The groove containing encasement or rubber block, would thereby become at least a portion, or part, of the surface of the tread groove itself.

In one embodiment, the rubber encasement, namely the rubber block forming the encasement, joins and extends from the tire carcass axially outward through the tread base layer through the outer tread cap rubber layer to and including the outer running surface of the tire tread (tread cap layer). Therefore the encasement, or rubber block, is not simply a thin rubber coating over a surface of the tread groove, but instead is a part of the tread groove itself. In another embodiment, the rubber encasement, namely the rubber block forming the encasement, extends from the tire carcass axially outward through the tread base layer into the outer tread cap rubber layer without extending to the tread running surface.

In another embodiment, the rubber encasement, namely the rubber block forming the encasement, joins and extends from the tread base layer through the outer tread cap rubber layer to and including the outer running surface of the tire tread. Therefore the encasement, or rubber block, is not simply a thin rubber coating over a surface of the tread groove, but instead is a part of the tread groove itself. In another embodiment, the rubber encasement, namely the rubber block forming the encasement, joins and extends from the tread base layer into the outer tread cap rubber layer without extending to the tread running surface.

In another embodiment, the rubber encasement, namely the rubber block forming the encasement, extends from the tread base layer as an extension of the tread base layer through the outer tread cap rubber layer to and including a portion of the outer running surface of the tire tread. Therefore the encasement, or rubber block, is not simply a thin rubber coating over a surface of the tread groove, but instead is a part of the tread groove itself. In another embodiment, the rubber encasement, namely the rubber block forming the encasement, extends from the tread base layer (an extension of the tread base layer) into the outer tread cap rubber layer without extending to the tread running surface.

As indicated, the groove containing rubber block (rubber encasement) is a part of at least a portion of a tread groove and desirably includes the bottom of the tread groove.

The rubber composition of the groove containing rubber block (encasement) beneficially promotes at least one physical property such as greater tear resistance, greater cut growth resistance and increased elongation at break to the surface of the tread groove embedded in the rubber encasement, or rubber block, compared to the adjoining outer tread cap rubber composition which contains the rubber block. The rubber composition of the tread groove containing rubber block may also beneficially promote increased fatigue resistance of the surface of the embedded tread groove as compared to the adjoining outer tread cap rubber composition.

In one embodiment, rubber composition of the tread cap rubber layer may contain silica-rich reinforcing filler comprising a combination of rubber reinforcing carbon black and silica such as precipitated silica of which the silica is the majority of the rubber reinforcing filler. The preferably precipitated silica is used together with silica coupling agent. In one embodiment, the rubber reinforcing carbon black content of the tread cap rubber composition may be less than 30 parts by weight per 100 parts of elastomer (phr) which, in turn, can promote a significant reduction of its electrical conductivity (can promote an increase its electrical resistivity).

In one embodiment, the tread base rubber composition contains carbon black-rich filler reinforcement of which the rubber reinforcing carbon black is the majority of the rubber reinforcing filler. Therefore the rubber reinforcing carbon black is the majority of the reinforcing filler, usually in a quantity of at least 50 phr thereof. When the rubber reinforcing carbon black content in the rubber composition is at least 40 phr is expected to promote electrical conductivity (promote a reduction in electrical resistivity).

The rubber composition of the rubber encasement, or tread groove-containing rubber block may be of the same or different rubber composition as the tire carcass and the same or different from the tread base rubber layer.

When the tread groove containing rubber block contains at least 40 phr of rubber reinforcing carbon black which extends from the tread carcass rubber which contains at least 40 phr of rubber reinforcing carbon black extends to an outer tread rubber cap which contains less than 35, alternately less than 20, phr of rubber reinforcing carbon black a path of least electrical resistance (path of electrical conductivity) can thereby be provided between the tread carcass and outer tread running surface of the tread cap rubber layer by the groove containing rubber block.

In the description of this invention, terms such as "compounded rubber", "rubber compound" and "compound", if used herein, refer to rubber compositions containing of at least one elastomer blended with various ingredients, including curatives such as sulfur and cure accelerators. The terms "elastomer" and "rubber" may be used herein interchangeably unless otherwise indicated. It is believed that such terms are well known to those having skill in such art.

### Summary, Disclosure and Practice of the Invention

The invention relates to a pneumatic tire in accordance with claim 1.

Dependent claims refer to preferred embodiments of the invention.

Preferably, the tire is a truck tire or a bus tire.

The pneumatic tire in accordance with one aspect of the invention has a circumferential tread of a cap/base construction comprising of an outer tread cap rubber layer containing a plurality of ribs having tread running surfaces with intervening tread grooves between the ribs, together with an underlying a tread base rubber layer. The tire tread further includes at least one circumferential tread rubber block or tread rubber encasement which contains at least a portion of at least one of the tread grooves including the bottom of the contained tread groove or which encases at least one of tread grooves including the bottom of the encased tread groove. The tread groove-containing rubber block or the tread groove encasing tread rubber encasement either extends within the outer tread cap rubber layer to include a portion of the outer tread running surface of at least one rib of the tread cap rubber layer, or extends within the outer tread cap rubber layer without extending to a running surface of the tire tread. The rubber composition of the tread cap rubber layer and the rubber composition of the tread groove containing rubber block or the tread groove encasing tread rubber encasement each is an individual sulfur cured diene elastomer-containing rubber composition. The rubber composition of the tread groove containing rubber block or the tread groove encasing tread rubber encasement has a first cut growth resistance value, when applying the DeMattia cut growth test in accordance with ASTM D813-07 at 95°C, and the rubbe r composition of the tread cap rubber layer has a second cut growth resistance value, when applying the DeMattia cut growth test in accordance with ASTM D813-07 at 95°C. The first cut growth resistance value is greater than 30 min/mm and the second cut growth resistance value is equal to or less than 20 min/mm; and/or the first cut growth resistance value is at least 10 min/mm greater than the second cut growth resistance value.

In accordance with one aspect of the invention, the tire groove-containing rubber block or encasement may be a portion of the surface of at one of the tread grooves.

In accordance with one another aspect of the invention, a tread groove may extend through the outer tread cap rubber layer and into the underlying tread base rubber layer.

In accordance with one aspect of the invention, a tread groove in the outer tread cap rubber layer may not extend to the underlying tread base rubber layer.

In accordance with one aspect of the invention, the tire groove-containing rubber block or encasement may:
(A) extend radially outward from said tire carcass through said tread base rubber layer into said outer tread cap rubber to include a portion of the outer tread running surface of at least one rib of said tread cap rubber layer, or
(B) extend radially outward from said tire carcass trough said tread base rubber layer into said outer tread cap rubber without extending to a running surface of the tire (whereas, in such embodiment, the rubber block may include the bottom of said groove and up to about 50 percent of the height of said groove from its bottom).

In accordance with another aspect of the invention, the tire groove-containing rubber block or encasement may:
(A) join and extends from said tread base rubber layer to and within said outer tread cap rubber to include a portion of the outer tread running surface of at least one rib of said tread cap rubber layer, or
(B) join and extends from said tread base rubber layer to and within said outer tread cap rubber without extending to a running surface of the tire (whereas, in such embodiment, the rubber block may include the bottom of said groove and up to about 50 percent of the height of said groove from its bottom).

In accordance with another aspect of the invention, the tire groove-containing rubber block or encasement may:
(A) extend from or even above from (i.e. is embedded in said tread cap rubber layer) said tread base rubber layer to and within said outer tread cap rubber to include a portion of the outer tread running surface of at least one rib of said tread cap rubber layer, or
(B) extend from or above from (i.e. is embedded in said tread cap rubber layer) said tread base rubber layer to and within said outer tread cap rubber without extending to a running surface of the tire (whereas, in such embodiment, the rubber encasement may include the bottom of said groove up to about 50 percent of the height of said groove from its bottom).

In accordance with another aspect of the invention, the circumferential tread rubber block or tread rubber encasement comprises a sulfur cured diene elastomer-containing rubber composition.

In accordance with another aspect of the invention, the tread cap rubber layer may comprise a silica, preferably precipitated silica rich rubber composition which contains less than 35, alternately less than 30, phr of rubber reinforcing carbon black reinforcing filler and said tread base rubber layer and said rubber block joining and extending from said tread rubber base layer or said tread base rubber layer and said encasement rubber block extending from said tread rubber base as a part of the tread base rubber layer are the same or different carbon black rich rubber compositions which contain at least 40, alternately at least 50 phr of rubber reinforcing carbon black reinforcing filler.

In accordance with another aspect of the invention, the rubber composition of the tread cap rubber layer may comprise, based on parts by weight per 100 parts by weight rubber (phr):
(A) from 51 to 90, alternatively 70 to 90, phr of diene based elastomers comprising cis 1,4-polyisoprene rubber (desirably natural cis 1,4-polyisoprene rubber), and 10 to 49, alternately from 10 to 30, phr of at least one of cis 1,4-polybutadiene rubber and styrene/butadiene rubber, or
(B) from 51 to 90, alternatively 70 to 90, phr of diene based elstomers comprising cis 1,4-polybutadiene rubber, and 10 to 49, alternately from 10 to 30, phr of cis 1,4-polyisoprene rubber (desirably natural cis 1,4-polyisprene rubber),
   where the rubber composition of the tread cap rubber layer contains 40 to 120 phr of rubber reinforcing filler comprising:
   (1) rubber reinforcing carbon black, or
   (2) silica such as precipitated silica (amorphous synthetic silica), which may containing a minimal amount of carbon black (e.g. up to 10 phr of carbon black)
   (3) a combination of rubber reinforcing carbon black and silica such as precipitated silica (amorphous synthetic silica), (in one embodiment said rubber reinforcing filler may contain from 5 to 40, alternately 5 to 30, phr of rubber reinforcing carbon black);
   together with a silica coupler for said silica having a moiety reactive with hydroxyl groups on said silica and another different moiety interactrive with said diene based elastomers,
   wherein the rubber composition of said tread base rubber layer and said tread groove containing rubber block or said tread rubber encasement contain the same or different elastomers as the tread cap rubber composition and individually comprise:
(C) 51 to about 90, alternatively 70 to 90, phr of cis 1,4-polyisoprene rubber (desirably natural cis 1,4-polyisoprene rubber), and 10 to 49, alternately from 10 to 30, phr of at least one of cis 1,4-polybutadiene rubber and styrene/butadiene rubber, or
(D) from 51 to 90, alternatively 70 to 90, phr diene based elastomers comprising cis 1,4-polybutadiene rubber, and 10 to 49, alternately from 10 to 30, phr of cis 1,4-polyisoprene rubber (desirably natural cis 1,4-polyisprene rubber), or
(E) from 40 to 60 phr of diene based elastomers comprising cis 1,4-polyisoprene rubber and, correspondingly from 60 to 40 phr of at least one of cis 1,4-polybutadiene rubber and styrene/butadiene rubber,
   where the rubber composition of said tread base rubber layer and said tread groove containing rubber block or said tread rubber encasement individually contain 40 to 100 phr of rubber reinforcing filler comprising:
   (1) rubber reinforcing carbon black, or
   (2) combination of rubber reinforcing carbon black and silica such as precipitated silica (amorphous synthetic silica) (for example, the said rubber reinforcing filler may contain from 40 to 80, alternately 55 to 60, phr of rubber reinforcing carbon black;
      together with a silica coupler for said silica having a moiety reactive with hydroxyl groups on said silica and another different moiety interactive with said diene bassed elastomers.

In one aspect of the invention, the cis 1,4-polybutadiene rubber may be:
(A) a first cis 1,4-polybutadiene rubber having a microstructure comprising from 90 to 99 percent cis 1,4-isomeric units, a number average molecular weight (Mn) in a range of from 120,000 to 300,000 and a heterogeneity index (Mw/Mn) in a range of from 2.1/1 to 4.5/1 (a relatively high heterogeneity index range illustrating a significant disparity between its number average and weight average molecular weights), or
(B) a second cis 1,4-polybutadiene rubber having a microstructure comprising from 96 to 99 percent cis 1,4-isomeric units, a number average molecular weight (Mn) in a range of from 150,000 to 300,000 and a heterogeneity index (Mw/Mn) in a range of from 1.5/1 to 2/1 (a relatively moderate heterogeneity index range illustrating a moderate disparity between its number average and weight average molecular weights).

The first cis 1,4-polybutadiene rubber may be the product of a nickel catalyst promoted polymerization of 1,3-butadiene monomer in an organic solvent solution such as, for example polymerization of 1,3-polybutadiene monomer in an organic solvent solution in the presence of a catalyst system as described in US-A- 5,451,646 which is based on polymerization of 1,3-butadiene monomer with a catalyst system comprising, for example, a combination of an organonickel compound (e.g. nickel salt of a carboxylic acid), organoaluminum compound (e.g. trialkylaluminum) and fluoride containing compound (e.g. hydrogen fluoride or complex thereof).

The second cis 1,4-polybutadiene rubber may be the product of a neodymium catalyst promoted polymerization of 1,3-butadiene monomer in an organic solvent such as, for example, polymerization of 1,3-butadiene monomer in an organic solvent solution in the presence of a catalyst system comprising, for example, organoaluminum compound, organometallic compound such as for example neodymium, and labile (e.g. vinyl) halide as described in, for example, US-A-4,663,405.

The silica coupler preferably has a moiety reactive with hydroxyl groups (e.g. silanol groups) on said silica or precipitated silica and another different moiety interactive with said conjugated diene elastomers.

In accordance with one aspect of the invention, the silica coupling agent may comprise a bis(3-trialkoxysilylalkyl) polysulfide containing an average in a range of from 2 to 3.8, alternately from 2 to 2.6 and alternately from 3 to 3.8, connecting sulfur atoms in its polysulfidic bridge or an alkoxyorganomercaptosilane.

In accordance with one aspect of the invention, the silica coupling agent comprises bis(3-triethoxysilylpropyl) polysulfide.

In accordance with one aspect of the invention, the bis(3-triethoxypropyl) polysulfide may contain an average in range of from 2 to 2.6 connecting sulfur atoms in its polysulfidic bridge.

An important aspect of this invention is use of tire tread groove-containing rubber blocks or encasement to promote resistance to tread groove cracking, particularly tear resistance and cut growth resistance.

### Brief Description of Drawings

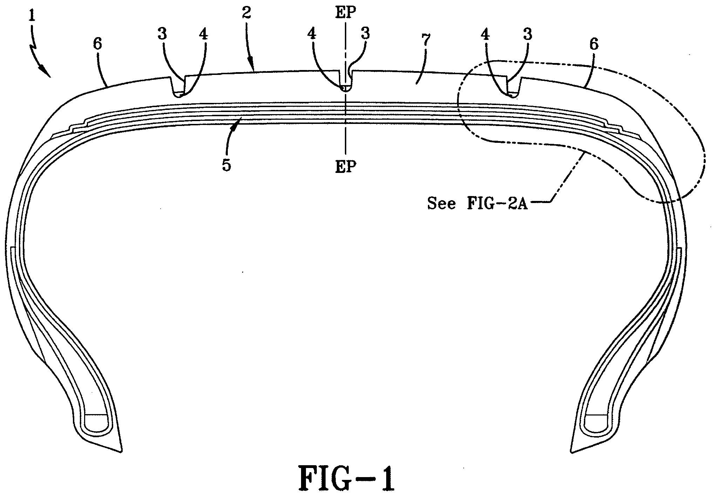

Drawings presented as Figures 1, 2A, 2B, 3A, 3B, 4A and 4B are provided to illustrate embodiments of the invention.

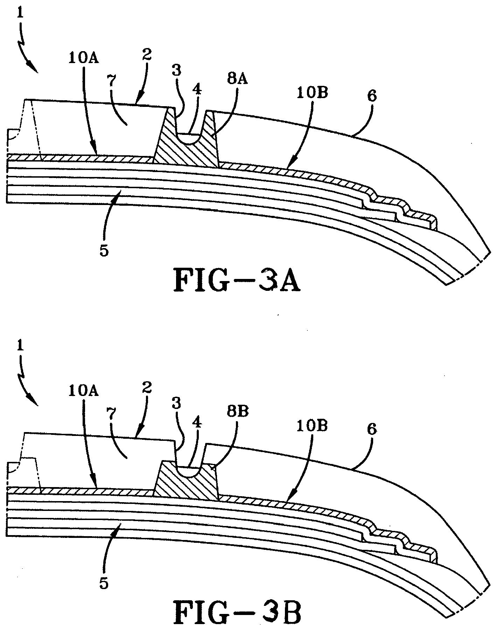

In accordance with Fig. 1, 3A and 3B, a tire and tire cross-section is provided with a tread configured with lugs and grooves and composed of an outer tread cap rubber layer, an underlying tread base rubber layer and a rubber block or encasement containing said grooves which joins the tire carcass as a tire component separate from the tire carcass itself and which extends radially outward through a tread base rubber layer and hence into the tread cap rubber layer (Fig. 1) in which the internal rubber black extends to and becomes a part of the tread's running surface (Fig. 3A) or extends only to about 50 percent beyond its groove bottom (Fig. 3B).

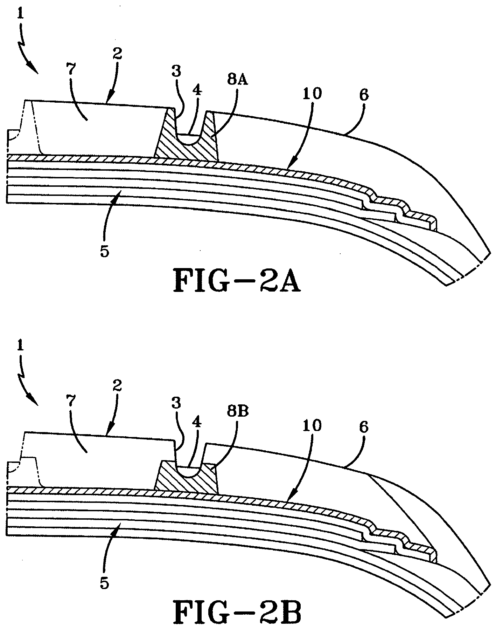

In accordance with Fig. 1, 2A and 2B, a tire and tire cross-section is provided with a tread configured with lugs and grooves and composed of an outer tread cap rubber layer, an underlying tread base rubber layer and internal rubber block or encasement containing said grooves which joins the tread base rubber layer and extends radially outward into the tread cap rubber layer. Alternatively, the internal rubber block or encasement containing said groove may be embedded in the outer tread cap rubber layer but not in contact with underlying tread base rubber layer. In Fig. 2A, the internal rubber block or encasement extends to and includes a running surface of the tread. In Fig. 2B, the internal tread block or encasement extends to a height of about 50 percent of the groove which it contains.

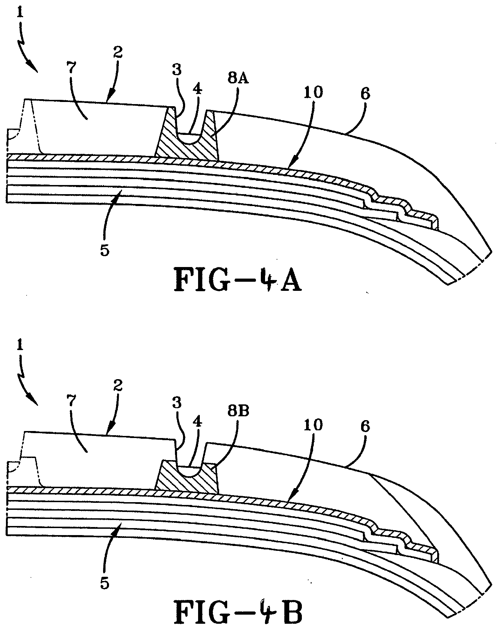

In accordance with Fig. 1, 4A and 4B, a tire and tire cross-section is provided with a tread configured with lugs and grooves and composed of an outer tread cap rubber layer, an underlying tread base rubber layer and internal rubber block or encasement containing said grooves as an extension of the tread base rubber layer which extends tread base rubber layer into the tread cap rubber layer (Fig. 1) in which the internal rubber block extends to and becomes a running surface of the tread (Fig. 4A) or about 50 percent of the height of the tread groove above its bottom and above its tread wear indicator (Fig. 4B). In this embodiment, the internal rubber block or encasement is unitary with the tread base rubber layer and made of the same material.

### In the Drawings

Fig. 1 illustrates a cross section of a pneumatic tire 1 composed of an outer tread cap rubber layer 2 of a rib and groove configuration, namely circumferential ribs 7 with a tread running surface 6 and intervening circumferential grooves 3, underlying tread base rubber layer 10 positioned over a tire carcass 5.

Fig. 3A illustrates a portion of the tire cross section 1 of Fig 1 to include the outer tread cap rubber cap rubber layer 2 with circumferential ribs 7 to provide a running surface 6 for the tread and an underlying tread base rubber layer 1 with supporting tire carcass 5 and a tread groove containing rubber block, or encasement, 8A which joins the tire carcass 5 and which extends radially outward through a divided tread base rubber layer 10A and 10B and thence into and through the outer tread cap rubber layer 2 to and including a part of its running surface 6, together with an optional treadwear indicator 4.

Fig. 3B illustrates a portion of the tire cross section 1 of Fig. 1 to include the outer tread cap rubber cap rubber layer 2 with circumferential ribs 7 to provide a running surface 6 for the tread and an underlying tread base rubber layer 10 with supporting tire carcass 5 and a tread groove containing rubber block, or encasement, 8B which joins the tire carcass 5 and which extends radially outward through a divided tread base rubber layer 10A and 10B and thence into outer tread cap rubber layer 2 for a distance of about 50 percent of the height of the tread groove from the bottom of the groove and above its tread wear indicator 4 and which does not extend to the tread's running surface 6.

In Fig. 2A and Fig. 2B respectively, the tread groove containing rubber block 8A, 8B or the tread groove encasing tread rubber encasement joins the tire tread base rubber layer 10A, 10B and extends radially outward from the tread base rubber layer 10A, 10B into the tread cap rubber layer 2. In Fig. 2A, the tread groove containing rubber block 8A extends to the tread's running surface 6, whereas in Fig. 2B the tread groove containing rubber block 8A does not extend to the tread's running surface 6.

In Fig. 4A and Fig. 4B respectively, the tread groove containing rubber block 8A, 8B or the tread groove encasing tread rubber encasement 8A, 8B is an extension of the tread base rubber layer 10A, 10B and extends radially outward into the tread cap rubber layer 2. In Fig. 4A, the tread groove containing rubber block 8A extends to the tread's running surface 6, whereas in Fig. 4B the tread groove containing rubber block 8A does not extend to the tread's running surface 6.

The precipitated silica for the reinforcing filler is a synthetic amorphous silica (e. g. precipitated silica) such as, for example, those obtained by the acidification of a soluble silicate (e.g., sodium silicate or a co-precipitation of a silicate and an aluminate). The BET surface area of the synthetic silica (precipitated silica), as measured using nitrogen gas, may, for example, be in a range of 50 to 300, alternatively 120 to 200, square meters per gram. The silica may also have a dibutylphthalate (DBP) absorption value in a range of, for example, 100 to 400, and usually 150 to 300 cc/g. Various commercially available synthetic silicas, particularly precipitated silicas, may be considered for use in this invention such as silicas commercially available from PPG Industries under the Hi-Sil trademark with designations 210, 243; silicas available from Rhodia, with designations of Zeosil 1165MP™, Zeosil 165GR™ and Zeosil Premium™, and silicas available from Evonic and from Huber as Zeopol 8745™.

The following Table A presents various desirable physical properties for the rubber composition of the tread groove containing rubber block 8A, 8B (or tread rubber encasement component) of the tread (positioned within the tread and containing a tread groove) compared to an example of as tread cap layer 2, as well as a desirable difference in the indicated physical properties of the tread block and example of tread cap rubber layer with a view toward resisting cracking (e. g. surface cracking) of a tread groove, particularly at a bottom of as tread groove as the tread is flexed over time.

The values for the tread cap are 2 presented as being exemplary properties.

The values for the basic tread groove containing rubber block 8A, 8B are presented as being the desirable properties.

The values for the alternate tread groove containing rubber block 8A, 8B are presented as being alternate properties.

The desirable differences between the tread groove containing rubber block 8A, 8B and tread cap rubber layer 2 are presented as being desirable property differences.

**Table A**

| | Tread | Tread Block | | Desirable Difference Between |
|---|---|---|---|---|
| Property | Cap Example | Basic | Alternate | Block & Cap |
| Energy, J (Joules) at break DeMattia cut growth rate, | ≤ 100 | ≥ 150 | ≥ 120 | ≥ 20 |
| at 95°C, (min/mm) | ≤ 20 | ≥ 30 | ≥ 20 | similar |
| Elongation at break (%) | ≤ 500 | ≥ 600 | ≥ 550 | ≥ 50 |
| | | | | |

| Additionally desired rubber properties | | | | |
|---|---|---|---|---|
| Aged energy, J (Joules) at break | ≤ 85 | ≥ 120 | ≥ 100 | ≥ 15 |
| Tear resistance, N (Newtons) | ≤ 150 | ≥ 200 | ≥ 160 | ≥ 10 |
| Aged tear resistance, N (Newtons), 95°C | ≤ 95 | ≥ 120 | ≥ 100 | similar |
| Aged elongation at break (%) | ≤ 400 | ≥ 500 | ≥ 450 | 50 |

### Comparative Shore A hardness - values can be similar

Tear Resistance may be obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. The greater the tear resistance value, the beneficially greater the resistance to surface cracking of the tread grove surface.

The energy (in Joules) can be measured by an ATS (Automated Test System instrument by Instron Company) which is a measure of energy to achieve elongation at break. It is understood that the greater the energy value (higher value in joules of energy), represents a beneficially greater tread groove surface resistance to cracking.

The DeMattia cut growth rate is measured according to ASTM D813-07 but at a temperature of 95°C. It is understood that the le ss the cut growth rate, the beneficially greater the resistance of the tread groove to surface crack growth.

For the Aged Energy value, the cured rubber sample is aged for seven days at 70°C.

For the Aged Tear Resistance value, the cured rubber Sample is aged for seven days at 70°C.

For the Aged Elongation value, the cured rubber Sample is aged for seven days at 70°C.

From Table A, it is readily seen that it is desired for the tread groove containing block rubber composition (the cured rubber) as compared to the tread cap rubber layer composition to have a combination of at least two of the following:
(A) increased tear resistance,
(B) increased DeMattia cut growth resistance (rate),
(C) increased elongation at break, and
(D) increased energy to break.

It is also seen that the internal tread groove containing rubber block is not provided with a purpose of adding stiffness (e.g. Shore A hardness) to the tread (particularly the tread cap rubber layer) because it is normally desired to have a similar Shore A hardness as the tread cap rubber layer.

It is readily understood by those having skill in the art that the rubber compositions of the tread components would be compounded with conventional compounding ingredients including the aforesaid reinforcing fillers such as carbon black and silica such as precipitated silica, as hereinbefore defined, in combination with a silica coupling agent, as well as antidegradant(s), processing oil as hereinbefore defined, fatty acid comprised of, for example, stearic, oleic, palmitic, and possibly linolenic, acids, zinc oxide, sulfur-contributing material(s) and vulcanization accelerator(s) as hereinbefore mentioned.

Processing aids may be used, for example, waxes such as microcrystalline and paraffinic waxes, in a range, for example, of 1 to 5 phr; and resins, usually as tackifiers, such as, for example, synthetic hydrocarbon and natural resins in a range of, for example, 1 to 5 phr. A curative might be classified as sulfur together with one or more sulfur cure accelerator(s). In a sulfur and accelerator(s) curative, the amount of sulfur used may be, for example, from 0.5 to 5 phr, and the accelerator(s), often of the sulfenamide type, is (are) used in a range of 0.5 to 5 phr. The ingredients, including the elastomers but exclusive of sulfur and accelerator curatives, are normally first mixed together in a series of at least two sequential mixing stages, although sometimes one mixing stage might be used, to a temperature in a range of, for example, 145°C to 185°C, and such mixing stages are typically referred to as non-productive mixing stages. Thereafter, the sulfur and accelerators, and possibly one or more retarders and possibly one or more antidegradants, are mixed therewith to a temperature of, for example, 90°C to 120°C and is typically referred as a productive mix stage.

After mixing, the compounded rubber can be fabricated such as, for example, by extrusion through a suitable die to form a tire tread. The tire tread is then typically built onto a sulfur curable tire carcass and the assembly thereof cured in a suitable mold under conditions of elevated temperature and pressure by methods well known to those having skill in such art.

The following Example is provided to further illustrate the invention. The parts and percentages are by weight unless otherwise indicated.

### EXAMPLE

Rubber compositions were prepared to evaluate and compare rubber compositions for physical properties.

Rubber compositions are referred in this Example as rubber Samples A and B.
Rubber Sample A contains a combination of 20 phr of natural (cis 1,4-polyisoprene) rubber and 80 phr of cis 1,4-polybutadiene rubber with 20 phr of the natural rubber.
Rubber Sample B contains a combination of 50 phr of natural (cis 1,4-polyisoprene) rubber and 50 phr of cis 1,4-polybutadiene rubber with 50 phr of the natural rubber.

The basic rubber composition formulation is shown in Table 1 and the ingredients are expressed in parts by weight per 100 parts rubber (phr) unless otherwise indicated.

The rubber compositions may be prepared by mixing the elastomers(s) without sulfur and sulfur cure accelerators in a first non-productive mixing stage (NP-1) in an internal rubber mixer for 4 minutes to a temperature of 160°C. If desired, the rubber mixture may then mixed in a second non-productive mixing stage (NP-2) in an internal rubber mixer for 4 minutes to a temperature of 160°C without adding additional ingredients. The resulting rubber mixture may then mixed in a productive mixing stage (PR) in an internal rubber mixer with sulfur and sulfur cure accelerator(s) for 2 minutes to a temperature of 110°C. The rubber composition may then sheeted out and cooled to below 50°C between e ach of the non-productive mixing steps and prior to the productive mixing step.

In the following Table 1, exemplary rubber compositions for a tread rubber cap layer (containing tread grooves) and tread groove encasement candidate (which includes a tread base rubber layer) are shown and reported as rubber Samples A and B.

**Table 1**

| | Rubber Sample A | Rubber Sample B Tread Groove |
|---|---|---|
| Material | Tread Cap Example | Block candidate |
| Non-productive mixing | | |
| Natural rubber elastomer¹ | 20 | 50 |
| cis 1,4-polybutadiene elastomer² | 0 | 50 |
| cis 1,4-polybutadiene elastomer³ | 80 | 0 |
| Carbon black⁴, N121 | 47 | 0 |
| Carbon black⁵, N550 | 0 | 30 |
| Silica⁶ 0 | 30 | |
| Silica⁷ 10 | 0 | |
| Silica coupler⁸ | 2.5 | 0 |
| Silica coupler⁹ | 0 | 5 |
| Oil¹⁰ 5 | 2 | |
| Wax¹¹ 1.5 | 1.5 | |
| Antioxidants¹² | 4 | 6 |
| Resin¹³ | 0 | 5 |
| Fatty acid | 2.5 | 1 |
| Zinc oxide | 3 | 3 |
| | | |

| Productive mixing | | |
|---|---|---|
| Sulfur 1.15 | 1.5 | |
| Accelerator¹⁴ | 1.37 | 1.45 |

| | | |
|---|---|---|
| ¹Natural rubber SMR-20 or SMR-5 ²cis 1,4-polybutadiene elastomer as Bud™ 1208 from The Goodyear Tire & Rubber Company ³cis 1,4-polybutadiene elastomer as Bud™ 4001 from The Goodyear Tire & Rubber Company ⁴Carbon black N121(ASTM designation) ⁵Carbon black N550 (ASTM designation) carbon black having an Iodine number of about 43 with a DBP value of about 121. ⁶Precipitated silica as HI-SIL™ 210 KS300 from PPG Industries which is synthetic hydrated, amorphous, precipitated silica ⁷Precipitated silica as Zeosil 1165 from Rhodia ⁸Liquid coupling agent comprised of bis(3-triethoxysilylpropyl) polysulfide having an average of from 3.4 to 3.8 connecting sulfur atoms in its polysulfidic bridge as Si69™ from Evonic ⁹Coupling agent composite of carbon black (N330) and bis-(3-triethoxysilypropyl) polysulfide having an average of from 2.1 to 2.6 connecting sulfur atoms in its polysulfidic bridge as Si266™ from Evonic in a 50-50 weight ratio ¹⁰Rubber processing oil ¹¹A mixture of microcrystalline and paraffin waxes ¹²Amine based antioxidants ¹³Non-staining, unreactive phenol formaldehyde resin ¹⁴Sulfenamide based sulfur cure accelerator(s) | | |

The prepared rubber compositions were cured at a temperature of 170ºC for 12 minutes for the tread block (tread groove containing rubber block) rubber composition and 150°C for 32 minutes for the tread cap rubber composition and the resulting cured rubber samples evaluated for various physical properties which are reported in Table 2.

**Table 2**

| Candidate | Rubber Sample A Tread Cap Example | | Rubber Sample B Tread Groove Block |
|---|---|---|---|
| ATS¹ | | | |
| 100% modulus, MPa | | 2.76 | 1.43 |
| 300% modulus, MPa | | 12.4 | 6.64 |
| Tensile strength, MPa | | 18.3 | 15.9 |
| Ultimate elongation (elongation at break) (%) | | 453 | 609 |
| Energy, J (Joules) to achieve break (at break) | | 90 | 170 |
| | | | |

| Shore A hardness² | | | |
|---|---|---|---|
| 23°C | | 71 | 63 |
| 100°C | | 61 | 57 |
| | | | |

| Zwick Rebound³ | | | |
|---|---|---|---|
| 23°C | | 44 | 44 |
| 100°C | | 54 | 53 |
| | | | |
| Tear strength (tear resistance), original, 95°C, N ⁴ | | 141 | 238 |
| Mattia cut-growth rate at 95°C, min/mm | | 16 | 284 |
| | | | |

| RPA505 Analytical Test Instrument | | | |
|---|---|---|---|
| Uncured G' (0.83Hz; 100°C; 15% strain), MPa | | 0.372 | 0.232 |
| T25, min | | 1.98 | 1.9 |
| T90 min | | 2.88 | 2.52 |
| Cured G' (1% strain; 100°C; 1 Hz), MPa | | 3 | 2.28 |
| Cured G' (10% strain; 100°C; 1 Hz), MPa | | 1.6 | 1.29 |
| Cured G' (50% strain; 100°C; 1 Hz), MPa | | 0.9 | 0.68 |
| Tan Delta (10% strain; 100°C; 1 Hz) | | 0.19 | 0.19 |
| | | | |

| ATS, Rubber Samples Aged 7 days at 70°C | | | |
|---|---|---|---|
| 100% modulus, MPa¹ | | 3.91 | 2.27 |
| 300% modulus, MPa | | 16 | 10.4 |
| Tensile strength, MPa | | 18.2 | 16.2 |
| Ultimate elongation (elongation at break) (%) | | 366 | 495 |
| Energy, J (joules) to achieve break (at break) | | 81 | 129 |
| | | | |

| Shore A Hardness, aged² | | | |
|---|---|---|---|
| 23°C | | 74 | 69 |
| 100°C | | 66 | 64 |
| | | | |

| Zwick Rebound, aged³ | | | |
|---|---|---|---|
| 23°C | | 46 | 49 |
| 100°C | | 57 | 58 |
| | | | |
| Tear strength, (tear resistance) aged, 95°C, N | | 92 | 101 |

| | | | |
|---|---|---|---|
| ¹Automated Testing System (ATS) instrument by the Instron Corporation which incorporates a plurality of tests in one system. Such instrument may determine properties such as ultimate tensile, ultimate elongation, modulii and energy to break data reported in the Table is generated by running the ring tensile test station which is an Instron 4201 load frame based on ASTM D412. ²ASTM D2240 ³ASTM D1054 ⁴Data obtained according to a peel strength adhesion (tear strength) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. | | | |

From Table 2 it can be seen that the energy to break increased from 90 to 170 Joules for the tread groove encasement candidate as compared to the exemplary tread cap value which is indicative of a significant increase in the rubber composition's durability. This agrees with the indicated desirable physical properties and associated differences in physical properties found in Table A.

From Table 2 it can also be seen that the tear strength (resistance to tear) at (95°C) increased from 141 to 238 for the tread groove encasement candidate as compared to the exemplary tread cap value which is also indicative of a significant increase in the rubber composition's durability. This agrees with the indicated desirable physical properties and associated differences in physical properties found in Table A.

In one sense, while the mechanism might not be entirely clear, it appears that contributing to the beneficial increases in predictive durability might be promoted, at least in part, by a significant increase in natural cis 1,4-polyisoprene content together with an optimized reinforcing filler and type, as well as an adjustment of the sulfur cure package in a sense of an increase in sulfur content and sulfur/accelerator ratio, to promote an increase in tear and cut growth resistance.

## Claims

1. A pneumatic tire having a circumferential tread of a cap/base construction comprising an outer tread cap rubber layer (2) containing a plurality of ribs (7) having tread running surfaces with intervening tread grooves (3) between the ribs (7), together with an underlying tread base rubber layer (10A, 10B);
wherein the tire tread further includes at least one circumferential tread rubber block (8A, 8B) or tread rubber encasement (8A, 8B) which contains at least a portion of at least one of the tread grooves (3) including the bottom of the contained tread groove (3) or which encases at least one of the tread grooves (3) including the bottom of the encased tread groove (3);
wherein the tread groove-containing rubber block (8A, 8B) or the tread groove encasing tread rubber encasement (8A, 8B)
(A) extends within the outer tread cap rubber layer (2) to include a portion of the outer tread running surface (6) of at least one rib (7) of the tread cap rubber layer (2), or
(B) extends within the outer tread cap rubber layer (2) without extending to a running surface (6) of the tire tread;
wherein the rubber composition of the tread cap rubber layer (2) and the rubber composition of the tread groove containing rubber block (8A, 8B) or the tread groove encasing tread rubber encasement (8A, 8B) each is an individual sulfur cured diene elastomer-containing rubber composition; **characterized in that**
the rubber composition of the tread groove containing rubber block (8A, 8B) or the tread groove encasing tread rubber encasement (8A, 8B) has a first cut growth resistance value, when applying the DeMattia cut growth test in accordance with ASTM D813-07 at 95°C;
wherein the rubber composition of the tread cap rubber layer (2) has a second cut growth resistance value, when applying the DeMattia cut growth test in accordance with ASTM D813-07 at 95°C;
and wherein:
(i) the first cut growth resistance value is greater than 30 min/mm and the second cut growth resistance value is equal to or less than 20 min/mm; and/or
(ii) the first cut growth resistance value is at least 10 min/mm greater than the second cut growth resistance value.

2. The pneumatic tire of claim 1, wherein the first cut growth resistance value is greater than 100 min/mm and the second cut growth resistance value is equal to or less than 20 min/mm; and/or the first cut growth resistance value is at least 80 min/mm greater than the second cut growth resistance value.

3. The pneumatic tire of claim 1, wherein the first cut growth resistance value is greater than 200 min/mm and the second cut growth resistance value is equal to or less than 20 min/mm; and/or the first cut growth resistance value is at least 180 min/mm greater than the second cut growth resistance value.

4. The pneumatic tire of at least one of the previous claims, wherein the tread groove containing rubber block (8A, 8B) or the tread groove encasing tread rubber encasement (8A, 8B) joins the tire carcass (5) and extends radially outward from the tire carcass (5) through the tread base rubber layer (10A, 10B) into the tread cap rubber layer (2).

5. The pneumatic tire of at least one of the previous claims 1-3, wherein the tread groove containing rubber block (8A, 8B) or the tread groove encasing tread rubber encasement (8A, 8B) joins the tire tread base rubber layer (10A, 10B) and extends radially outward from the tread base rubber layer (10A, 10B) into the tread cap rubber layer (2).

6. The pneumatic tire of at least one of the previous claims 1-3, wherein the tread groove containing rubber block (8A, 8B) or the tread groove encasing tread rubber encasement (8A, 8B) is an extension of the tread base rubber layer (10A, 10B) and extends radially outward into the tread cap rubber layer (2).

7. The pneumatic tire of at least one of the previous claims 1, 4, 5, or 6, wherein the tread groove containing rubber block (8A, 8B) or the tread groove encasing tread rubber encasement (8A, 8B) contains the bottom and at least a portion of the walls of at least one of the tread grooves (3), or wherein the tread groove containing rubber block (8A, 8B) or the tread groove encasing tread rubber encasement (8A, 8B) contains the bottom and fully encases the walls of at least one of the tread grooves (3) up to the tread running surface (6).

8. The pneumatic tire of at least one of the previous claims, wherein the tread groove containing rubber block (8A, 8B) or the tread groove encasing tread rubber encasement (8A, 8B) extends within the outer tread cap rubber layer (2) to include a portion of a running surface (6) of the tire tread.

9. The pneumatic tire of at least one of the previous claims 1 to 7, wherein the tread groove containing rubber block (8A, 8B) or the tread groove encasing tread rubber encasement (8A, 8B) extends within the outer tread cap rubber layer (2) without extending to a running surface (6) of the tire tread.

10. The pneumatic tire of at least one of the previous claims, wherein the tread groove containing rubber block (8A, 8B) or the tread groove encasing tread rubber encasement (8A, 8B) includes the bottom of at least one of the tread grooves (3) and up to 50 percent of the height of the tread groove (3), alternatively from 5 to 40 percent or from 20 to 40 percent of the height of the groove (3), from its bottom.

11. The tire of at least one of the previous claims, wherein the rubber composition of the tread cap rubber layer (2) comprises, based on parts by weight per 100 parts by weight rubber (phr):
(A) from 50 to 90 phr of diene based elastomers comprising cis 1,4-polyisoprene rubber and 10 to 50 phr of at least one of cis 1,4-polybutadiene rubber and styrene/butadiene rubber, or
(B) from 50 to 90 phr of diene based elastomers comprising cis 1,4-polybutadiene rubber, and 10 to 50 phr of cis 1,4-polyisoprene rubber;
where the rubber composition of said tread cap rubber layer contains:
(C) 40 to 120 phr of a rubber reinforcing filler comprising:
(1) rubber reinforcing carbon black, or
(2) a combination of rubber reinforcing carbon black and silica or precipitated silica together with a silica coupler for said silica precipitated silica having a moiety reactive with hydroxyl groups contained on said silica and another different moiety interactive with said diene based elastomers.

12. The tire of at least one of the previous claims wherein the rubber composition of the tread base rubber layer (10A, 10B) contains the same or different elastomers as the tread cap layer rubber composition and comprises:
(D) from 50 to 90 phr of diene based elastomers comprising cis 1,4-polyisoprene rubber and from 10 to 50, phr of at least one of cis 1,4-polybutadiene rubber and styrene/butadiene rubber, or
(E) from 50 to 90 phr of diene-based elastomers comprising cis 1,4-polybutadiene rubber, and 10 to 50 phr of cis 1,4-polyisoprene rubber; and
(F) 40 to 100 phr of a rubber reinforcing filler comprising:
(1) rubber reinforcing carbon black, or
(2) a combination of rubber reinforcing carbon black and silica or precipitated silica together with a silica coupler for said silica or precipitated silica having a moiety reactive with hydroxyl groups on said silica and another different moiety interactive with said diene based elastomers.

13. The tire of at least one of the previous claims wherein the rubber composition of the tread groove containing rubber block (8A, 8B) or the tread groove encasing tread rubber encasement contains the same or different elastomers as the tread cap layer rubber composition and comprises:
(D) from 50 to 90 phr of diene based elastomers comprising cis 1,4-polyisoprene rubber and from 10 to 50, phr of at least one of cis 1,4-polybutadiene rubber and styrene/butadiene rubber, or
(E) from 50 to 90 phr of diene-based elastomers comprising cis 1,4-polybutadiene rubber, and 10 to 50 phr of cis 1,4-polyisoprene rubber; and
(F) 40 to 100 phr of a rubber reinforcing filler comprising:
(1) rubber reinforcing carbon black, or
(2) a combination of rubber reinforcing carbon black and silica or precipitated silica together with a silica coupler for said silica or precipitated silica having a moiety reactive with hydroxyl groups on said silica and another different moiety interactive with said diene based elastomers.

14. The tire of at least one of the previous claims wherein the rubber composition of the tread groove containing rubber block (8A, 8B) or the tread groove encasing tread rubber encasement as compared to the rubber composition of the tread cap rubber layer (2) has a combination of at least two of:
(A) increased tear resistance,
(B) increased elongation at break, and
(C) increased energy to break.

15. The tire of claim 14, wherein:
(A) for the tear resistance values, the rubber composition of the tread cap rubber layer (2) has a value of less than or equal 150 Newtons and the rubber composition of the tread groove containing rubber block (8A, 8B) or the tread groove encasing tread rubber encasement has a value of equal or greater than 160 Newtons;
(B) for the elongation break value, the rubber composition of the tread cap rubber layer (2) has a value of equal or less than 500 percent and the rubber composition of the tread groove containing rubber block (8A, 8B) or the tread groove encasing tread rubber encasement has a value of equal to or greater than 600 percent;
(C) for the energy to break, the rubber composition of the tread cap rubber layer (2) has a value of equal or less than 100 Joules and the rubber composition of the tread groove containing rubber block (8A, 8B) or the tread groove encasing tread rubber encasement has a value of equal to or greater than 120 Joules.

## Patentansprüche

1. Luftreifen, der eine umfangsgerichtete Lauffläche von einer Laufstreifenoberteil-/Laufstreifenunterteil-Konstruktion aufweist, welche eine äußere Laufstreifenoberteilkautschuklage (2), die eine Vielzahl von Rippen (7) enthält die Laufflächenoberflächen mit dazwischenliegenden Rillen (3) zwischen den Rippen (7) aufweisen, zusammen mit einer darunterliegenden Laufstreifenunterteilkautschuklage (10A, 10B) umfasst;
wobei die Reifenlauffläche weiter mindestens einen umfangsgerichteten Laufflächenkautschukblock (8A, 8B) oder Laufflächenkautschukumhüllung (8A, 8B) beinhaltet, der bzw. die mindestens einen Abschnitt von mindestens einer der Profilrillen (3), einschließlich des Grundes der enthaltenen Profilrille (3), enthält, oder der mindestens eine der Profilrillen (3), einschließlich des Grundes der umhüllten Profilrille (3), umhüllt;
wobei der Profilrillen-enthaltende Kautschukblock (8A, 8B) oder die Profilrillen-umhüllende Laufflächenkautschukumhüllung (8A, 8B)
(A) sich innerhalb der äußeren Laufstreifenoberteilkautschuklage (2) erstreckt, sodass sie einen Abschnitt der äußeren Laufflächenoberfläche (6) mindestens einer Rippe (7) der Laufstreifenoberteilkautschuklage (2) beinhaltet, oder
(B) sich innerhalb der äußeren Laufstreifenoberteilkautschuklage (2) erstreckt, ohne sich bis zu einer Laufoberfläche (6) der Reifenlauffläche zu erstrecken;
wobei die Kautschukzusammensetzung der Laufstreifenoberteilkautschuklage (2) und die Kautschukzusammensetzung des Profilrillen-enthaltenden Kautschukblocks (8A, 8B) oder der Profilrillen-umhüllenden Lauftlächenkautschukumhüllung (8A, 8B) jede eine individuelle schwefelvulkanisierte Dienelastomer-enthaltende Kautschukzusammensetzung ist; **dadurch gekennzeichnet, dass**
die Kautschukzusammensetzung des Profilrillen-enthaltenden Kautschukblocks (8A, 8B) oder der Profilrillen-umhüllenden Laufflächenkautschukumhüllung (8A, 8B), bei Anwendung des DeMattia-Schnittwachstumstests gemäß ASTM D813-07 bei 95°C, einen ersten Schnittwachstumswiderstandswert aufweist;
wobei die Kautschukzusammensetzung der Laufstreifenoberteilkautschuklage (2), bei Anwendung des DeMattia-Schnittwachstumstests gemäß ASTM D813-07 bei 95°C, einen zweiten Schnittwachstumswiderstandswert aufweist;
und wobei:
(i) der erste Schnittwachstumswiderstandswert größer als 30 min/mm ist und der zweite Schnittwachstumswiderstandswert gleich oder kleiner als 20 min/mm ist; und/oder
(ii) der erste Schnittwachstumswiderstandswert mindestens 10 min/mm größer als der zweite Schnittwachstumswiderstandswert ist.

2. Luftreifen nach Anspruch 1, wobei der erste Schnittwachstumswiderstandswert größer als 100 min/mm ist und der zweite Schnittwachstumswiderstandswert gleich oder kleiner als 20 min/mm ist; und/oder der erste Schnittwachstumswiderstandswert mindestens 80 min/mm größer als der zweite Schnittwachstumswiderstandswert ist.

3. Luftreifen nach Anspruch 1, wobei der erste Schnittwachstumswiderstandswert größer als 200 min/mm ist und der zweite Schnittwachstumswiderstandswert gleich oder kleiner als 20 min/mm ist; und/oder der erste Schnittwachstumswiderstandswert mindestens 180 min/mm größer als der zweite Schnittwachstumswiderstandswert ist.

4. Luftreifen nach mindestens einem der vorhergehenden Ansprüche, wobei der Profilrillen-enthaltende Kautschukblock (8A, 8B) oder die Profilrillen-umhüllende Laufflächenkautschukumhüllung (8A, 8B) an die Reifenkarkasse (5) anschließt und sich radial auswärts von der Reifenkarkasse (5) durch die Laufstreifenunterteilkautschuklage (10A,10B) in die Laufstreifenoberteilkautschuklage (2) erstreckt.

5. Luftreifen nach mindestens einem der vorhergehenden Ansprüche 1-3, wobei der Profilrillen-enthaltende Kautschukblock (8A, 8B) oder die Profilrillen-umhüllende Laufflächenkautschukumhüllung (8A, 8B) an die Reifenlaufstreifenunterteilkautschuklage (10A, 10B) anschließt und sich radial auswärts von der Laufstreifenunterteilkautschuklage (10A, 10B) in die Laufstreifenoberteilkautschuklage (2) erstreckt.

6. Luftreifen nach mindestens einem der vorhergehenden Ansprüche 1-3, wobei der Profilrillen-enthaltende Kautschukblock (8A, 8B) oder die Profilrillen-umhüllende Laufflächenkautschukumhüllung (8A, 8B) eine Fortsetzung der Laufstreifenunterteilkautschuklage (10A, 10B) ist und sich radial auswärts in die Laufstreifenoberteilkautschuklage (2) erstreckt.

7. Luftreifen nach mindestens einem der vorhergehenden Ansprüche 1, 4, 5 oder 6, wobei der Profilrillen-enthaltende Kautschukblock (8A, 8B) oder die Profilrillen-umhüllende Laufflächenkautschukumhüllung (8A, 8B) den Grund und mindestens einen Abschnitt der Wände von mindestens einer der Profilrillen (3) enthält, oder wobei der Profilrillen-enthaltende Kautschukblock (8A, 8B) oder die Profilrillen-umhüllende Laufflächenkautschukumhüllung (8A, 8B) den Grund von mindestens einer der Profilrillen (3) enthält und deren Wände bis zu der Laufflächen-Oberfläche (6) vollständig umhüllt.

8. Luftreifen nach mindestens einem der vorhergehenden Ansprüche, wobei der Profilrillen-enthaltende Kautschukblock (8A, 8B) oder die Profilrillen-umhüllende Laufflächenkautschukumhüllung (8A, 8B) sich innerhalb der äußeren Laufstreifenoberteilkautschuklage (2) erstreckt, sodass er bzw. sie einen Abschnitt einer Laufoberfläche (6) der Reifenlauffläche beinhaltet.

9. Luftreifen nach mindestens einem der vorhergehenden Ansprüche 1 bis 7, wobei der Profilrillen-enthaltende Kautschukblock (8A, 8B) oder die Profilrillen-umhüllende Laufflächenkautschukumhüllung (8A, 8B) sich innerhalb der äußeren Laufstreifenoberteilkautschuklage (2) erstreckt, ohne sich bis zu einer Laufoberfläche (6) der Reifenlauffläche zu erstrecken.

10. Luftreifen nach mindestens einem der vorhergehenden Ansprüche, wobei der Profilrillen-enthaltende Kautschukblock (8A, 8B) oder die Profilrillen-umhüllende Laufflächenkautschukumhüllung (8A, 8B) den Grund von mindestens einem der Profilrillen (3) und bis zu 50 Prozent der Höhe der Profilrille (3) beinhaltet, alternativ 5 bis 40 Prozent oder 20 bis 40 Prozent der Höhe der Rille (3), ab ihrem Grund.

11. Reifen nach mindestens einem der vorhergehenden Ansprüche, wobei die Kautschukzusammensetzung der Laufstreifenoberteilkautschuklage (2), auf Basis von Gewichtsteilen je 100 Gewichtsteile Kautschuk (phr), umfasst:
(A) 50 bis 90 phr dienbasierte Elastomere, umfassend cis-1,4-Polyisoprenkautschuk, und 10 bis 50 phr von mindestens einem von cis-1,4-Polybutadienkautschuk und Styrol-/Butadien-Kautschuk, oder
(B) 50 bis 90 phr dienbasierte Elastomere, umfassend cis-1,4-Polybutadienkautschuk, und 10 bis 50 phr cis-1,4-Polyisoprenkautschuk;
wobei die Kautschukzusammensetzung der Laufstreifenoberteilkautschuklage enthält:
(C) 40 bis 120 phr eines Kautschukverstärkungsfüllstoffs, umfassend:
(1) Kautschukverstärkungs-Carbon Black, oder
(2) eine Kombination von Kautschukverstärkungs-Carbon Black und Silika oder ausgefälltem Silika zusammen mit einem Silikahaftvermittler für das Silika oder ausgefällte Silika, der einen Anteil, der mit auf dem Silika enthaltenen Hydroxylgruppen reaktiv ist, und einen anderen, verschiedenen Anteil, der mit den dienbasierten Elastomeren in Wechselwirkung tritt, aufweist.

12. Reifen nach mindestens einem der vorhergehenden Ansprüche, wobei die Kautschukzusammensetzung der Laufstreifenunterteillage (10A, 10B) dieselben oder verschiedene Elastomere wie die Laufstreifenoberteillagen-Kautschukzusammensetzung enthält und umfasst:
(D) 50 bis 90 phr dienbasierte Elastomere, umfassend cis-1,4-Polyisoprenkautschuk, und 10 bis 50 phr von mindestens einem von cis-1,4-Polybutadienkautschuk und Styrol-/Butadien-Kautschuk, oder
(E) 50 bis 90 phr dienbasierte Elastomere, umfassend cis-1,4-Polybutadienkautschuk, und 10 bis 50 phr cis-1,4-Polyisoprenkautschuk; und
(F) 40 bis 100 phr eines Kautschukverstärkungsfüllstoffs, umfassend:
(1) Kautschukverstärkungs-Carbon Black, oder
(2) eine Kombination von Kautschukverstärkungs-Carbon Black und Silika oder ausgefälltem Silika zusammen mit einem Silikahaftvermittler für das Silika oder ausgefällte Silika, der einen Anteil, der mit Hydroxylgruppen auf dem Silika reaktiv ist, und einen anderen, verschiedenen Anteil, der mit den dienbasierten Elastomeren in Wechselwirkung tritt, aufweist.

13. Reifen nach mindestens einem der vorhergehenden Ansprüche, wobei die Kautschukzusammensetzung des Profilrillen-enthaltenden Kautschukblocks (8A, 8B) oder der Profilrillen-umhüllenden Laufflächenkautschukumhüllung dieselben oder verschiedene Elastomere wie die Laufstreifenoberteillagen-Kautschukzusammensetzung enthält und umfasst:
(D) 50 bis 90 phr dienbasierte Elastomere, umfassend cis-1,4-Polyisoprenkautschuk, und 10 bis 50 phr von mindestens einem von cis-1,4-Polybutadienkautschuk und Styrol-/Butadien-Kautschuk, oder
(E) 50 bis 90 phr dienbasierte Elastomere, umfassend cis-1,4-Polybutadienkautschuk, und 10 bis 50 phr cis-1,4-Polyisoprenkautschuk; und
(F) 40 bis 100 phr eines Kautschukverstärkungsfüllstoffs, umfassend:
(1) Kautschukverstärkungs-Carbon Black, oder
(2) eine Kombination von Kautschukverstärkungs-Carbon Black und Silika oder ausgefälltem Silika zusammen mit einem Silikahaftvermittler für das Silika oder ausgefällte Silika, der einen Anteil, der mit Hydroxylgruppen auf dem Silika reaktiv ist, und einen anderen, verschiedenen Anteil, der mit den dienbasierten Elastomeren in Wechselwirkung tritt, aufweist.

14. Reifen nach mindestens einem der vorhergehenden Ansprüche, wobei die Kautschukzusammensetzung des Profilrillen-enthaltenden Kautschukblocks (8A, 8B) oder der Profilrillen-umhüllenden Laufflächenkautschukumhüllung, verglichen mit der Kautschukzusammensetzung der Laufstreifenoberteilkautschuklage (2), eine Kombination aufweist von mindestens zwei von:
(A) erhöhter Reißfestigkeit,
(B) erhöhter Bruchdehnung, und
(C) erhöhter Brucharbeit.

15. Reifen nach Anspruch 14, wobei:
(A) für die Reißfestigkeitswerte die Kautschukzusammensetzung der Laufstreifenoberteilkautschuklage (2) einen Wert von kleiner oder gleich 150 Newton aufweist und die Kautschukzusammensetzung des Profilrillen-enthaltenden Kautschukblocks (8A, 8B) oder der Profilrillen-umhüllenden Laufflächenkautschukumhüllung einen Wert von gleich oder größer als 160 Newton aufweist;
(B) für den Bruchdehnungswert die Kautschukzusammensetzung der Laufstreifenoberteilkautschuklage (2) einen Wert von gleich oder kleiner als 500 Prozent aufweist und die Kautschukzusammensetzung des Profilrillen-enthaltenden Kautschukblocks (8A, 8B) oder der Profilrillen-umhüllenden Laufflächenkautschukumhüllung einen Wert von gleich oder größer als 600 Prozent aufweist;
(C) für die Brucharbeit die Kautschukzusammensetzung der Laufstreifenoberteilkautschuklage (2) einen Wert von gleich oder kleiner als 100 Joule aufweist und die Kautschukzusammensetzung des Profilrillen-enthaltenden Kautschukblocks (8A, 8B) oder der Profilrillen-umhüllenden Laufflächenkautschukumhüllung einen Wert von gleich oder größer als 120 Joule aufweist.

## Revendications

1. Bandage pneumatique possédant une bande de roulement circonférentielle dont la structure est du type chape/base, comprenant une couche de caoutchouc externe faisant office de chape de la bande de roulement (2) contenant un certain nombre de nervures (7) possédant des surfaces de contact de la bande de roulement, des rainures de bande de roulement (3) venant s'intercaler entre les nervures (7), conjointement avec une couche de caoutchouc sous-jacente faisant office de base de la bande de roulement (10A, 10B) ;
dans lequel la bande de roulement du bandage pneumatique englobe en outre au moins un bloc de caoutchouc de la bande de roulement circonférentielle (8A, 8B) ou une enveloppe de caoutchouc de bande de roulement (8A, 8B) qui contient au moins une portion d'au moins une des rainures de bande de roulement (3) englobant la base de la rainure de bande de roulement (3) qui y est contenue ou qui enveloppe au moins une des rainures de bande de roulement (3) englobant la base de la rainure de bande de roulement (3) qui est enveloppée ;
dans lequel bloc de caoutchouc (8A, 8B) contenant la rainure ou l'enveloppe de caoutchouc de bande de roulement (8A, 8B) qui enveloppe au moins la rainure de bande de roulement :
(A) s'étend au sein de la couche de caoutchouc externe faisant office de chape de la bande de roulement (2) pour englober une portion de la surface externe de contact de la bande de roulement (6), d'au moins une nervure (7) de la couche de caoutchouc faisant office de chape de la bande de roulement (2) ; ou
(B) s'étend au sein de la couche de caoutchouc externe faisant office de chape de la bande de roulement (2) sans s'étendre jusqu'à une surface de contact (6) de la bande de roulement du bandage pneumatique ;
dans lequel la composition de caoutchouc de la couche de caoutchouc faisant office de chape de la bande de roulement (2) et la composition de caoutchouc du bloc de caoutchouc contenant la rainure de bande de roulement (8A, 8B) ou de l'enveloppe de caoutchouc de bande de roulement (8A, 8B) qui enveloppe la rainure de bande de roulement représente chacune une composition individuelle de caoutchouc vulcanisé au soufre contenant un élastomère diénique ; **caractérisé en ce que** :
la composition de caoutchouc du bloc de caoutchouc contenant la rainure de bande de roulement (8A, 8B) ou de l'enveloppe de caoutchouc de bande de roulement (8A, 8B) qui enveloppe la rainure de bande de roulement possède une première valeur de résistance au développement des coupures lorsqu'on applique le test de développement des coupures de DeMattia conformément à la norme ASTM D813-07 à 95 °C ;
dans lequel la composition de caoutchouc de la couche de caoutchouc faisant office de chape de la bande de roulement (2) possède une seconde valeur de résistance au développement des coupures lorsqu'on applique le test de développement des coupures de DeMattia conformément à la norme ASTM D813-07 à 95 °C ;
et dans lequel :
(i) la première valeur de résistance au développement des coupures est supérieure à 30 min/mm et la seconde valeur de résistance au développement des coupures est égale ou inférieure à 20 min/mm ; et/ou
(ii) la première valeur de résistance au développement des coupures est supérieure à concurrence d'au moins 10 min/mm à la seconde valeur de résistance au développement des coupures.

2. Bandage pneumatique selon la revendication 1, dans lequel la première valeur de résistance au développement des coupures est supérieure à 100 min/mm et la seconde valeur de résistance au développement des coupures est égale ou inférieure à 20 min/mm ; et/ou la première valeur de résistance au développement des coupures est supérieure à concurrence d'au moins 80 min/mm à la seconde valeur de résistance au développement des coupures.

3. Bandage pneumatique selon la revendication 1, dans lequel la première valeur de résistance au développement des coupures est supérieure à 200 min/mm et la seconde valeur de résistance au développement des coupures est égale ou inférieure à 20 min/mm ; et/ou la première valeur de résistance au développement des coupures est supérieure à concurrence d'au moins 180 min/mm à la seconde valeur de résistance au développement des coupures.

4. Bandage pneumatique selon au moins une des revendications précédentes, dans lequel bloc de caoutchouc contenant la rainure de bande de roulement (8A, 8B) ou l'enveloppe de caoutchouc de bande de roulement (8A, 8B) qui enveloppe la rainure de bande de roulement rejoint la carcasse (5) du bandage pneumatique et s'étend en direction radiale à l'extérieur de la carcasse (5) du bandage pneumatique à travers la couche de caoutchouc faisant office de base de la bande de roulement (10A, 10B) jusque dans la couche de caoutchouc faisant office de chape de la bande de roulement (2).

5. Bandage pneumatique selon au moins une des revendications 1 à 3, dans lequel bloc de caoutchouc contenant la rainure de bande de roulement (8A, 8B) ou l'enveloppe de caoutchouc de bande de roulement (8A, 8B) qui enveloppe la rainure de bande de roulement rejoint la couche de caoutchouc faisant office de base de la bande de roulement (10A, 10B) et s'étend en direction radiale à l'extérieur de la couche de caoutchouc faisant office de base de la bande de roulement (10A, 10B) jusque dans la couche de caoutchouc faisant office de chape de la bande de roulement (2).

6. Bandage pneumatique selon au moins une des revendications 1 à 3, dans lequel bloc de caoutchouc contenant la rainure de bande de roulement (8A, 8B) ou l'enveloppe de caoutchouc de bande de roulement (8A, 8B) qui enveloppe la rainure de bande de roulement représente un prolongement de la couche de caoutchouc faisant office de base de la bande de roulement (10A, 10B) et s'étend en direction radiale vers l'extérieur jusque dans la couche de caoutchouc faisant office de chape de la bande de roulement (2).

7. Bandage pneumatique selon au moins une des revendications 1, 4, 5 ou 6, dans lequel le bloc de caoutchouc contenant la rainure de bande de roulement (8A, 8B) ou l'enveloppe de caoutchouc de bande de roulement (8A, 8B) qui enveloppe la rainure de bande de roulement contient la base et au moins une portion des parois d'au moins une des rainures de bande de roulement (3), ou dans lequel le bloc de caoutchouc contenant la rainure de bande de roulement (8A, 8B) ou l'enveloppe de caoutchouc de bande de roulement (8A, 8B) qui enveloppe la rainure de bande de roulement contient la base et renferme complètement les parois d'au moins une des rainures de bande de roulement (3) jusqu'à la surface de contact de la bande de roulement (6).

8. Bandage pneumatique selon au moins une des revendications précédentes, dans lequel le bloc de caoutchouc contenant la rainure de bande de roulement (8A, 8B) ou l'enveloppe de caoutchouc de bande de roulement (8A, 8B) qui enveloppe la rainure de bande de roulement s'étend au sein de la couche de caoutchouc externe faisant office de chape de la bande de roulement (2) pour englober une portion d'une surface de contact (6) de la bande de roulement du bandage pneumatique.

9. Bandage pneumatique selon au moins une des revendications 1 à 7, dans lequel le bloc de caoutchouc contenant la rainure de bande de roulement (8A, 8B) ou l'enveloppe de caoutchouc de bande de roulement (8A, 8B) qui enveloppe la rainure de bande de roulement s'étend au sein de la couche de caoutchouc externe faisant office de chape de la bande de roulement (2) sans s'étendre jusqu'à une surface de contact (6) de la bande de roulement du bandage pneumatique.

10. Bandage pneumatique selon au moins une des revendications précédentes, dans lequel le bloc de caoutchouc contenant la rainure de bande de roulement (8A, 8B) ou l'enveloppe de caoutchouc de bande de roulement (8A, 8B) qui enveloppe la rainure de bande de roulement englobe la base d'au moins une des rainures de bande de roulement (3) et jusqu'à 50 % de la hauteur de la rainure de bande de roulement (3), en variante de 5 à 40 % ou de 20 à 40 % de la hauteur de la rainure (3), à partir de la base.

11. Bandage pneumatique selon au moins une des revendications précédentes, dans lequel la composition de caoutchouc de la couche de caoutchouc faisant office de chape de la bande de roulement (2) comprend, en se basant sur des parties en poids par 100 parties en poids de caoutchouc (phr) :
(A) de 50 à 90 phr d'élastomères à base diénique comprenant un caoutchouc de 1,4-cis polyisoprène et de 10 à 50 phr d'au moins un caoutchouc choisi parmi un caoutchouc de 1,4-cis polybutadiène et un caoutchouc de styrène/butadiène ; ou
(B) de 50 à 90 phr d'élastomères à base diénique comprenant un caoutchouc de 1,4-cis polybutadiène et de 10 à 50 phr d'un caoutchouc de 1,4-cis polyisoprène ;
dans lequel la composition de caoutchouc de ladite couche de caoutchouc faisant office de la chape de la bande de roulement contient :
(C) de 40 à 120 phr d'une matière de charge pour le renforcement du caoutchouc, comprenant :
(1) du noir de carbone pour le renforcement du caoutchouc ; ou
(2) une combinaison de noir de carbone pour le renforcement du caoutchouc et de silice ou de silice précipitée conjointement avec un coupleur de silice pour ladite silice, ladite silice précipitée possédant une fraction apte à réagir avec des groupes hydroxyle contenus sur ladite silice et une autre fraction différente apte à entrer en interaction avec lesdits élastomères à base diénique.

12. Bandage pneumatique selon au moins une des revendications précédentes, dans lequel la composition de caoutchouc de la couche de caoutchouc faisant office de base de la bande de roulement (10A, 10B) contient les mêmes élastomères ou des élastomères différents de ceux de la composition de caoutchouc de la couche de caoutchouc faisant office de chape de la bande de roulement et comprend :
(D) de 50 à 90 phr d'élastomères à base diénique comprenant un caoutchouc de 1,4-cis polyisoprène et de 10 à 50 phr d'au moins un caoutchouc choisi parmi un caoutchouc de 1,4-cis polybutadiène et un caoutchouc de styrène/butadiène ; ou
(E) de 50 à 90 phr d'élastomères à base diénique comprenant un caoutchouc de 1,4-cis polybutadiène et de 10 à 50 phr d'un caoutchouc de 1,4-cis polyisoprène ; et
(F) de 40 à 100 phr d'une matière de charge pour le renforcement du caoutchouc, comprenant :
(1) du noir de carbone pour le renforcement du caoutchouc ; ou
(2) une combinaison de noir de carbone pour le renforcement du caoutchouc et de silice ou de silice précipitée conjointement avec un coupleur de silice pour ladite silice, ladite silice précipitée possédant une fraction apte à réagir avec des groupes hydroxyle contenus sur ladite silice et une autre fraction différente apte à entrer en interaction avec lesdits élastomères à base diénique.

13. Bandage pneumatique selon au moins une des revendications précédentes, dans lequel la composition de caoutchouc du bloc de caoutchouc contenant la rainure de bande de roulement (8A, 8B) ou l'enveloppe de caoutchouc de bande de roulement qui enveloppe la rainure de bande de roulement contient les mêmes élastomères ou des élastomères différents de ceux de la composition de caoutchouc de la couche de caoutchouc faisant office de chape de la bande de roulement et comprend :
(D) de 50 à 90 phr d'élastomères à base diénique comprenant un caoutchouc de 1,4-cis polyisoprène et de 10 à 50 phr d'au moins un caoutchouc choisi parmi un caoutchouc de 1,4-cis polybutadiène et un caoutchouc de styrène/butadiène ; ou
(E) de 50 à 90 phr d'élastomères à base diénique comprenant un caoutchouc de 1,4-cis polybutadiène et de 10 à 50 phr d'un caoutchouc de 1,4-cis polyisoprène ; et
(F) de 40 à 100 phr d'une matière de charge pour le renforcement du caoutchouc, comprenant :
(1) du noir de carbone pour le renforcement du caoutchouc ; ou
(2) une combinaison de noir de carbone pour le renforcement du caoutchouc et de silice ou de silice précipitée conjointement avec un coupleur de silice pour ladite silice, ladite silice précipitée possédant une fraction apte à réagir avec des groupes hydroxyle contenus sur ladite silice et une autre fraction différente apte à entrer en interaction avec lesdits élastomères à base diénique.

14. Bandage pneumatique selon au moins une des revendications précédentes, dans lequel la composition de caoutchouc du bloc de caoutchouc contenant la rainure de bande de roulement (8A, 8B) ou de l'enveloppe de caoutchouc de bande de roulement qui enveloppe la rainure de bande de roulement, lorsqu'on la compare à la composition de caoutchouc de la couche de caoutchouc faisant office de chape de la bande de roulement (2) possède une combinaison d'au moins deux éléments choisis parmi :
(A) une augmentation de la résistance au déchirement ;
(B) une augmentation de l'allongement à la rupture ; et
(C) une augmentation de l'énergie de rupture.

15. Bandage pneumatique selon la revendication 14, dans lequel :
(A) en ce qui concerne les valeurs de résistance à la rupture, la composition de caoutchouc de la couche de caoutchouc faisant office de chape de la bande de roulement (2) possède une valeur inférieure ou égale à 150 Newtons et la composition de caoutchouc du bloc de caoutchouc contenant la rainure de bande de roulement (8A, 8B) ou de l'enveloppe de caoutchouc de bande de roulement qui enveloppe la rainure de bande de roulement possède une valeur égale ou supérieure à 160 Newtons ;
(B) en ce qui concerne la valeur d'allongement à la rupture, la composition de caoutchouc de la couche de caoutchouc faisant office de chape de la bande de roulement (2) possède une valeur égale ou inférieure à 500 % et la composition de caoutchouc du bloc de caoutchouc contenant la rainure de bande de roulement (8A, 8B) ou de l'enveloppe de caoutchouc de bande de roulement qui enveloppe la rainure de bande de roulement possède une valeur égale ou supérieure à 600 % ;
(C) en ce qui concerne la valeur d'énergie à la rupture, la composition de caoutchouc de la couche de caoutchouc faisant office de chape de la bande de roulement (2) possède une valeur égale ou inférieure à 100 Joules et la composition de caoutchouc du bloc de caoutchouc contenant la rainure de bande de roulement (8A, 8B) ou de l'enveloppe de caoutchouc de bande de roulement qui enveloppe la rainure de bande de roulement possède une valeur égale ou supérieure à 120 Joules.
